# EUROPEAN PATENT SPECIFICATION

(11) **EP 3 687 133 B1**
(45) Date of publication and mention of the grant of the patent: **15.12.2021**
(21) Application number: 19153090.6
(22) Date of filing: 22.01.2019
(51) Int. Cl.: H04L 29/06, H04L 12/28

(54) **SYSTEM AND METHOD FOR SYNCHRONIZATION OF MEDIA OBJECTS BETWEEN DEVICES OPERATING IN A MULTIROOM SYSTEM**
SYSTEM UND VERFAHREN ZUR SYNCHRONISIERUNG VON MEDIENOBJEKTEN ZWISCHEN IN EINEM MEHRRAUMSYSTEM BETRIEBENEN VORRICHTUNGEN
SYSTÈME ET PROCÉDÉ DE SYNCHRONISATION D'OBJETS MULTIMÉDIA ENTRE DES DISPOSITIFS FONCTIONNANT DANS UN SYSTÈME MULTIPIÈCES

(43) Date of publication of application: 29.07.2020
(73) Proprietor: Advanced Digital Broadcast S.A., 1293 Bellevue (CH)
(72) Inventor: Stolcenburg, Adam, 65-119 Zielona Gora (PL)
(74) Representative: Blonski, Pawel

(56) References cited:
- EP-A1- 2 282 462
- WO-A2-00/51289
- US-A1- 2007 050 392

## Description

### TECHNICAL FIELD

The present invention relates to a system and method for synchronization of media objects between devices operating in a multiroom system. In particular, the present invention relates to improving performance and utilization of related resources when considering such synchronization.

### BACKGROUND OF THE INVENTION

A multimedia home network is typically composed of multiple devices, which may directly communicate with each other. There are situations, in which multiple devices work together to provide a richer user experience, e.g. set top boxes working together as part of the Multiroom network. Such cooperation requires sharing of metadata of objects between devices, e.g. recordings shared by DVRs.

The most widely used method for sharing of such metadata is the UPnP Content Directory Service (CDS), which provides a number of actions allowing to retrieve metadata of objects as well as a notification mechanism that informs other devices when any of the shared objects' metadata have changed.

The method of sharing metadata of objects defined by UPnP Content Directory Service is not efficient in cases when there is a need to replicate a large amount of metadata, describing objects which change frequently, to multiple clients. In case of the UPnP Content Directory Service, a notification of a change requires sending a change notification to each of the subscribed clients, which in turn causes each client to execute an action on the CDS server. Multiple clients asking for the same data may severely degrade performance of the CDS server device, especially when metadata of the shared object are retrieved from an underlying database engine.

A publication EP2282462A1 describes a method, terminal, and server for updating an interactive component are disclosed. The method includes: receiving a notification message delivered by a server, where the notification message carries information about update of an interactive media document; and obtaining an updated interactive media document according to the information about update of the interactive media document.

Further, US2007/050392 A1 discloses a framework for data change notification includes a notification queue storing event notifications. Client applications can request event information regarding various data change events.

Lastly, WO 00/51289 A2 shows a system and method for implementing active registries in an electronic network comprises one or more source elements that each subscribe for notification from an event manager when either an add-element event or a remove-element event occurs.

The aim of the development of the present invention is an improved and effective system and method for synchronization of media objects between devices operating in a multiroom system.

### SUMMARY AND OBJECTS OF THE PRESENT INVENTION

An object of the present invention is a system and method for synchronization of media objects between devices, in a client-server system, as per the appended claims.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

### BRIEF DESCRIPTION OF THE DRAWINGS

These and other objects of the invention presented herein, are accomplished by providing a system and method for synchronization of media objects between devices operating in a multiroom system. Further details and features of the present invention, its nature and various advantages will become more apparent from the following detailed description of the preferred embodiments shown in a drawing, in which:
Fig. 1 presents a sequence diagram with interactions between exemplary entities;
Fig. 2 presents a diagram of a process for gathering information about changes of objects belonging to monitored containers;
Fig. 3 presents a method for managing an outgoing queue;
Fig. 4 shows a process for monitoring content of an outgoing queue and sending notifications to subscribed clients;
Fig. 5 depicts a diagram of the system according to the present invention;
Fig. 6 presents a high level method according to the present invention; and
Fig. 7 shows an example of a containers map.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

The present invention relates in general to a method, in which a multiroom server pushes metadata of selected objects, to its clients, whenever the data have been changed, while taking into account problems such as server's processing power and limited amount of memory, as well as problems related to the difference in processing power between said server and its clients.

The invention presents how metadata describing objects may be efficiently transferred from a server device to multiple client devices. It is assumed that the objects, which are being transferred are grouped in a number of containers. Moreover the solution assumes that objects, which need to be synchronized are stored in a database, e.g. an SQL database, which is able to notify whether a specific object was added, modified, or removed from the database e.g. through SQL triggers.

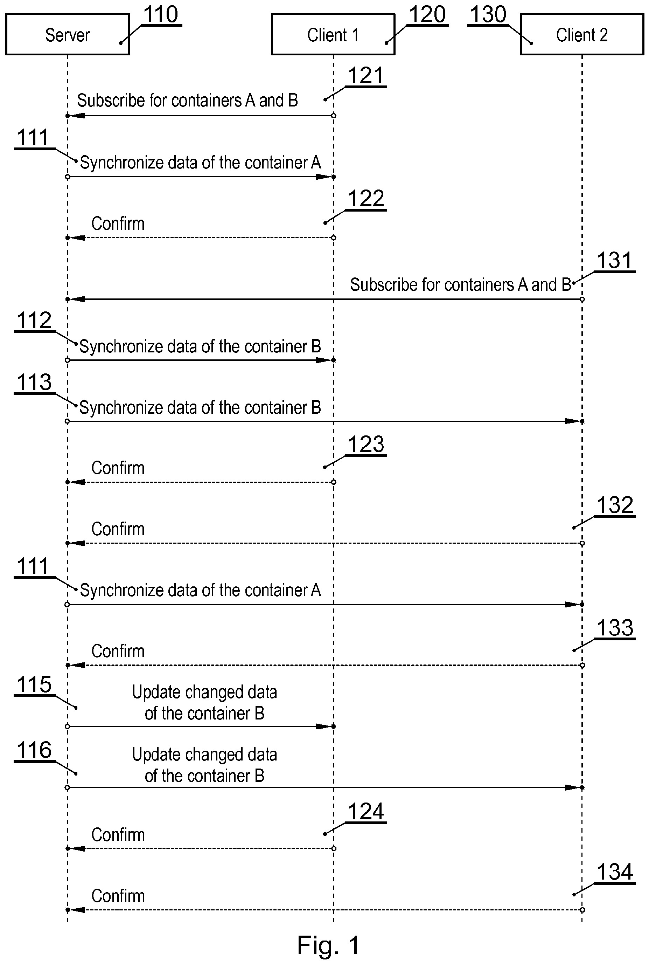

From the network's perspective, the process is divided into a number of steps depicted in Fig. 1, where clients subscribe to receive and monitor changes in objects belonging to selected containers (121, 131), and are later notified by the server with metadata of objects belonging to the subscribed containers (111, 112, 113, 114, 115, 116).

Objects may be added to respective containers to different events in a given system. For example, in case of a set top box such events may be: (a) reading a recordings list from a storage device, (b) receiving electronic program guide data update, (c) inserting a removable drive to a USB slot as well as (d) similar events.

The server may either send full contents of the subscribed container (111, 112, 113, 114), or only changes which can be applied to the previously transferred contents of a container (115, 116). The change information may be one of the following:
- an object was added to the subscribed container;
- an object belonging to the subscribed container was updated;
- an object was removed from the subscribed container.

Each time the server sends a notification, it waits for a confirmation that the data were received and processed by the client (122, 123, 124, 132, 133, 134). The confirmation may be sent either through the connection initiated by the server, which transferred the notification, or it may be a new connection initiated by the client.

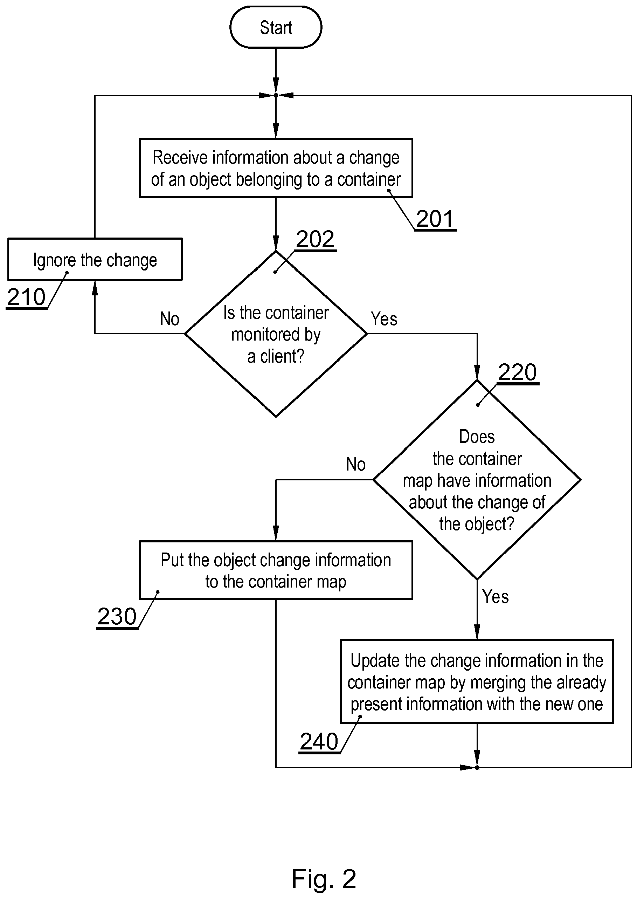

Preparation and sending of change information is divided into three processes (depicted in Figs. 2, 3 and 4 respectively). These processes run in parallel and communicate with each other through structures further called a container map and an outgoing queue.

The container map is a structure, which holds information about all containers which are being monitored by clients and information about changes of objects belonging to that container. The changes only keep information about type of the change and the identifier of the changed object. The outgoing queue is a queue which comprises ready to send notifications and is preferably organized as a FIFO queue.

The first process (of the three) is shown in Fig. 2 and concerns updating a container map at the server.

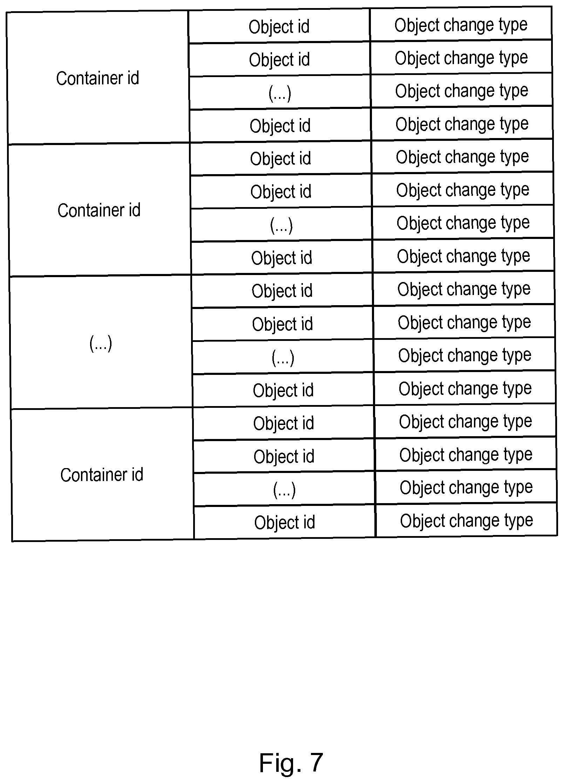

The containers map may be organized such that an identifier of a container is related to one or more objects (in some case a container may be empty and comprise zero objects) comprising an identifier of an object as well as information on a type of the respective change (as shown in Fig. 7). Such relation may be effected by means of a relational database wherein an object may be present only once in a given container (i.e. only a merged, single status update is present) but may be present in more than one container.

The process starts from receiving a change information delivered by the underlying database (201) and checks if the relevant container, to which the changed object belongs, is a container which is being monitored by at least one client (202), if not then the change information is ignored (210), otherwise it is checked whether the container map already comprises information about a change of the object (220). In case the information is not present, then the change information is put in the container map (230), otherwise the information is merged (240) according to the following formula:
1. If the already present object change information, in the container map, is the "object added" information and the new object change information is:
   a) object updated information - then the object added information is kept;
   b) object removed information - then the change information is removed from the container i.e. the object is non-existent because it has not yet been communicated to the clients (if any) before its removal has been requested.
2. If the already present object change information, in the container map, is the "object updated" information and the new object change information is:
   a) object updated information - then the information is not modified;
   b) object removed information - then the object removed information is kept;
3. If the already present object change information, in the container map, is the "object removed" information and the new object change information is:
   a) object added information - then the object updated information is kept.

Thus, in case a client has not yet received a notification regarding an object, and another notification regarding the same object is received, the server will merge the notifications so that a single interaction with the client is present. Therefore, such approach saves clients' as well as network resources.

The second process (managing an outgoing queue) waits until there is a need to fully synchronize at least one container or a change information appears in the container map (301), and then obtains and removes this information (302). By analyzing the type of the change it estimates how much memory is needed to prepare a notification and proceeds only when the sum of the estimated amount of memory plus the amount of memory used by the notifications already placed in the outgoing queue is within pre-defined limits (303). Thus, the amount of memory used for supporting notifications may be monitored and limited if needed.

Then the process starts preparation of the notification by first checking if the contents of a container need to be fully synchronized with at least one client (304). In that case a notification, holding metadata of all objects belonging to that container is prepared and any information about changes of the container in the containers map are removed (310), otherwise the process goes through all changes of objects belonging to the container, and retrieves metadata of objects which have been added or updated (320) (it does not have to be done for objects which have been removed) and prepares a change notification comprising information about all changed objects belonging to the container (321). The prepared notification is then put in the outgoing queue (305).

A process, which selects the next container to process (302) may prioritize containers in such a manner that the most important objects are transferred first and all the other are transferred according to the round robin algorithm.

The third process monitors contents of the outgoing queue (401) and if the outgoing queue is not empty then the process receives a notification from that queue (402) and sends it to all clients which are subscribed to the container, which the notification concerns (403). After all clients confirm reception of the notification, or a timeout occurs (404) the notification is removed from the outgoing queue (405).

If a client does not respond within a predefined amount of time (404) then it may be marked as stalled, as it is assumed that there is a problem with a connection to that client. Stalled clients may be later ignored while sending notifications to clients subscribed for a given container (403) to avoid too long breaks between notifications send to active clients. A stalled client may again become an active client if the server detects its activity in the network e.g. the client may send a subscription renewal request to the server.

The notification sent to each client (403) is enriched by a sequence number, which is a value associated with the client and is incremented before a notification is sent to that client. Thanks to this value, the client may notice that it missed some notifications and perform a rescue procedure e.g. it may unsubscribe and subscribe again to the observed containers.

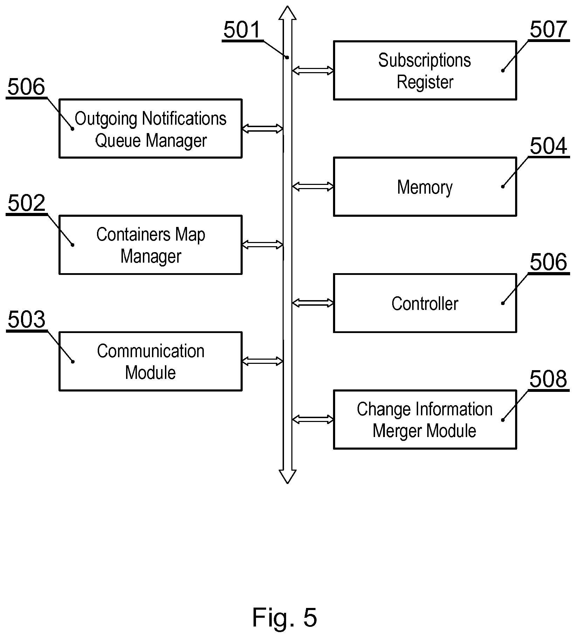

Fig. 5 presents a diagram of the system according to the present invention. The system is a synchronization server machine.

The system may be realized using dedicated components or custom made FPGA or ASIC circuits. The system comprises a data bus (501) communicatively coupled to a Memory (504). Additionally, other components of the system are communicatively coupled to the system bus (501) so that they may be managed by a Controller (505).

The Memory (504) may store computer program or programs executed by the Controller (505) in order to execute steps of the method according to the present invention.

A Communication Module (503) is configured to facilitate communication between the server and the clients that register in a Subscriptions Register (507) by providing their address data as well as containers subscription parameters.

A Containers Map Manager (502) is responsible for managing the containers map according the notifications from the underlying database.

Another unit is a Change Information Merger Module (508) configured to merge information comprised in the containers map as shown with reference to Fig. 2.

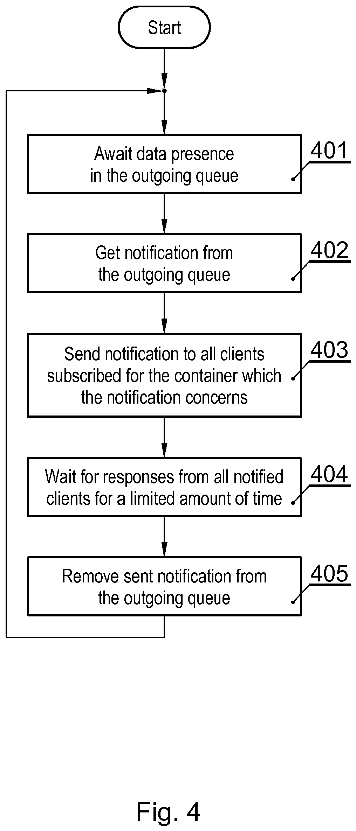

Lastly, an Outgoing Notifications Queue Manager (506) is responsible for managing the outgoing queue as per details shown with reference to Fig. 4.

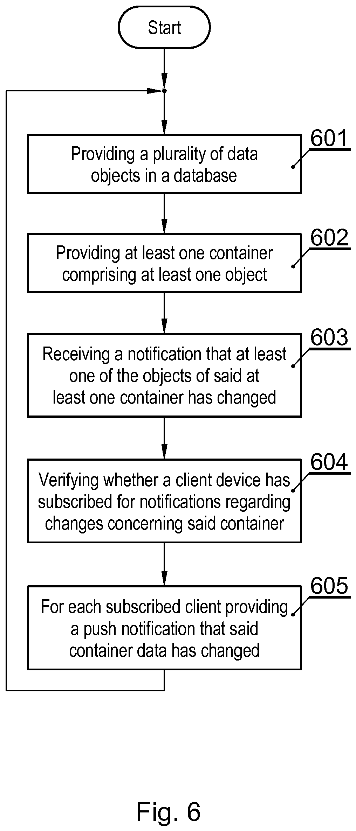

Fig. 6 presents a high level method according to the present invention. The process starts at step (601) from providing a plurality of data objects in a database. Subsequently, there is provided (602) at least one container comprising at least one object. Next, there is a step of receiving (603) a notification that at least one of the objects of said at least one container has changed and verifying (604) whether a client device has subscribed for notifications regarding changes concerning said container. Lastly, for each subscribed client, there is executed a step of providing (605) a push notification, comprising metadata of said objects, that said container data has changed.

Thanks to the merging of the update information (240) the server may skip preparation of some notifications. Owing to the fact that change notifications and in some cases synchronization notifications are prepared only once regardless of the number of clients, the server may reduce the number of accesses to the underlying database which are the most CPU intensive tasks (310, 320). By keeping track of the amount of memory used by the notifications (303) this solution guarantees that the server does not exceed its memory limits.

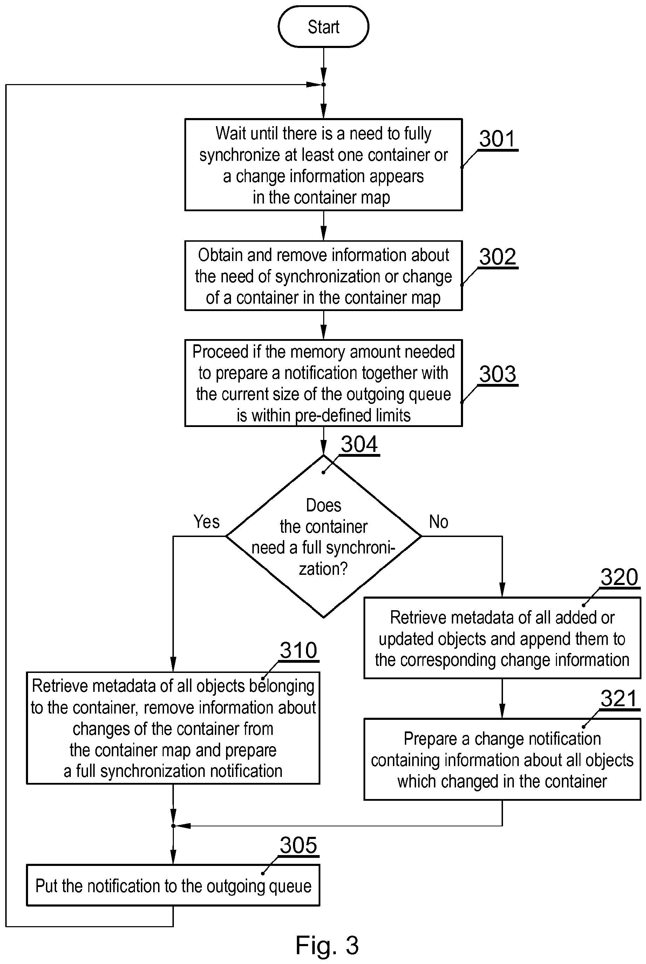

Waiting for confirmation that notifications send to clients were received and processed by them (404) guarantees that clients with lower processing power are not overloaded by the notifications send by the server. Keeping the process which prepares notifications (Fig. 3) separate from the process which sends those notifications (Fig. 4) guarantees that operations which may be potentially blocked for the longest periods of time like the database access and the network access do not influence each other. Therefore, the invention provides a useful, concrete and tangible result.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for synchronization of media objects between devices operating in a multiroom system may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention.

Accordingly, the scope of protection is not limited to the preferred embodiments described in the specification, but is only limited by the claims that follow.

## Claims

1. A method for synchronization of media objects between devices in a client-server system, the method being **characterized in that** the server is configured to execute the steps of:
• providing (601) a plurality of data objects in a database;
• providing (602) at least one container comprising at least one object;
• receiving (603) a notification, from said database, that at least one of the objects of said at least one container has changed;
• verifying (604) whether a client device has subscribed for notifications regarding changes concerning said container; and
• for each subscribed client providing (605) a push notification, comprising metadata of said container's objects, informing that said container's data has changed;
the method being **characterized in that**:
• the push notification sent to each client (403) comprises a sequence number, which is a value associated with the client and is incremented before a notification is sent to that client.

2. The method according to claim 1 wherein the method further comprises a step of awaiting confirmations (124) of the push notifications received by the respective clients.

3. The method according to claim 1 wherein said a container map is provided being a structure, which holds information about all containers which are being monitored by clients and information about changes of objects belonging to that container.

4. The method according to claim 3 wherein said information about changes of objects belonging to that container is one of the following:
- an object was added to the container;
- an object belonging to the container was updated;
- an object was removed from the container.

5. The method according to claim 4 further comprising the steps of verifying whether an object, for which a new change notification is to be generated, is already present in the container map and the already present change information is the "object added" information and when it is and the new object change information is:
a) object updated information - then the object added information is kept;
b) object removed information - then the change information is removed from the container.

6. The method according to claim 4 further comprising the steps of verifying whether an object, for which a new change notification is to be generated, is already present in the container map and the already present change information is the "object updated" information and when it is and the new object change information is:
a) object updated information - then the information is not modified;
b) object removed information - then the object removed information is kept.

7. The method according to claim 4 further comprising the steps of verifying whether an object, for which a new change notification is to be generated, is already present in the container map and the already present change information is the "object removed" information and when it is and the new object change information is:
a) object added information - then the object updated information is kept.

8. The method according to claim 1 wherein the containers have a priority of processing assigned wherein the most important objects are transferred first and all the other objects are transferred according to the round robin algorithm.

9. A computer program comprising program code means for performing all the steps of the computer-implemented method according to claim 1 when said program is run on a computer.

10. A computer readable medium storing computer-executable instructions performing all the steps of the computer-implemented method according to claim 1 when executed on a computer.

11. A system for synchronization of media objects between devices in a client-server system, the server being **characterized in that** it comprises:
• a data bus (501) communicatively coupled to a Memory (504) as well as other components of the system so that they may be managed by a Controller (505);
• a Communication Module (503) is configured to facilitate communication between the system and clients that register in a Subscriptions Register (507) by providing their address data as well as containers subscription parameters;
• a Containers Map Manager (502) responsible for managing a containers map according the notifications from an underlying database;
• a Change Information Merger Module (508) configured to merge information comprised in the containers map;
• an Outgoing Notifications Queue Manager (506) responsible for managing the outgoing queue notifications under control of the Controller (505) configured to execute all steps of the method according to claim 1.
• an Outgoing Notifications Queue Manager (506) responsible for managing the outgoing queue notifications under control of the Controller (505) configured to execute all steps of the method according to claim 1.

## Patentansprüche

1. Verfahren zur Synchronisation von Medienobjekten zwischen Vorrichtungen in einem Client-Server-System, wobei das Verfahren **dadurch gekennzeichnet ist, dass** der Server konfiguriert ist, um die folgenden Schritte auszuführen:
• Bereitstellen (601) einer Vielzahl von Datenobjekten in einer Datenbank;
• Bereitstellen (602) von zumindest einem Behälter, der zumindest ein Objekt umfasst;
• Empfangen (603) einer Benachrichtigung, von der Datenbank, dass sich zumindest eines der Objekte des zumindest einen Behälters geändert hat;
• Verifizieren (604), ob eine Client-Vorrichtung Benachrichtigungen bezüglich Änderungen betreffend den Behälter abonniert hat; und
• für jeden abonnierten Client Bereitstellen (605) einer Push-Benachrichtigung, die Metadaten der Objekte des Behälters umfasst, die informiert, dass sich die Daten des Behälters geändert haben;
wobei das Verfahren **dadurch gekennzeichnet ist, dass**:
• die Push-Benachrichtigung, die an jeden Client (403) gesendet wird, eine Sequenznummer umfasst, die ein Wert ist, der mit dem Client assoziiert ist und inkrementiert wird, bevor eine Benachrichtigung an diesen Client gesendet wird.

2. Verfahren nach Anspruch 1, wobei das Verfahren ferner einen Schritt des Abwartens von Bestätigungen (124) der Push-Benachrichtigungen umfasst, die durch die jeweiligen Clients empfangen werden.

3. Verfahren nach Anspruch 1, wobei die eine Behälterkarte bereitgestellt ist, die eine Struktur ist, die Informationen über alle Behälter enthält, die durch Clients überwacht werden, und Informationen über Änderungen von Objekten, die zu diesem Behälter gehören.

4. Verfahren nach Anspruch 3, wobei die Informationen über Änderungen von Objekten, die zu diesem Behälter gehören, eines des Folgenden sind:
- ein Objekt wurde dem Behälter hinzugefügt;
- ein Objekt, das zu dem Behälter gehört, wurde aktualisiert;
- ein Objekt wurde aus dem Behälter entfernt.

5. Verfahren nach Anspruch 4, ferner umfassend die Schritte des Verifizierens, ob ein Objekt, für das eine neue Änderungsbenachrichtigung erzeugt werden soll, bereits in der Behälterkarte vorhanden ist und die bereits vorhandenen Änderungsinformationen die "Objekt-hinzugefügt"-Informationen sind und wenn sie es sind und die neuen Objektänderungsinformationen wie folgt sind:
a) Objekt-aktualisiert-Informationen - dann werden die Objekt-hinzugefügt-Informationen beibehalten;
b) Objekt-entfernt-Informationen - dann werden die Änderungsinformationen aus dem Behälter entfernt.

6. Verfahren nach Anspruch 4, ferner umfassend die Schritte des Verifizierens, ob ein Objekt, für das eine neue Änderungsbenachrichtigung erzeugt werden soll, bereits in der Behälterkarte vorhanden ist und die bereits vorhandenen Änderungsinformationen die "Objekt-aktualisiert"-Informationen sind und wenn sie es sind und die neuen Objektänderungsinformationen wie folgt sind:
a) Objekt-aktualisiert-Informationen - dann werden die Informationen nicht modifiziert;
b) Objekt-entfernt-Informationen - dann werden die Objekt-entfernt-Informationen beibehalten.

7. Verfahren nach Anspruch 4, ferner umfassend die Schritte des Verifizierens, ob ein Objekt, für das eine neue Änderungsbenachrichtigung erzeugt werden soll, bereits in der Behälterkarte vorhanden ist und die bereits vorhandenen Änderungsinformationen die "Objekt-entfernt"-Informationen sind und wenn sie es sind und die neuen Objektänderungsinformationen wie folgt sind:
a) Objekt-hinzugefügt-Informationen - dann werden die Objekt-aktualisiert-Informationen beibehalten.

8. Verfahren nach Anspruch 1, wobei den Behältern eine Verarbeitungspriorität zugewiesen ist, wobei die wichtigsten Objekte zuerst übertragen werden und alle anderen Objekte gemäß dem Round-Robin-Algorithmus übertragen werden.

9. Computerprogramm, das Programmcodemittel umfasst, um alle Schritte des computerimplementierten Verfahrens nach Anspruch 1 durchzuführen, wenn das Programm auf einem Computer läuft.

10. Computerlesbares Medium, das computerausführbare Anweisungen speichert, die alle Schritte des computerimplementierten Verfahrens nach Anspruch 1 durchführen, wenn auf einem Computer ausgeführt.

11. System zur Synchronisation von Medienobjekten zwischen Vorrichtungen in einem Client-Server-System, wobei der Server **dadurch gekennzeichnet ist, dass** er Folgendes umfasst:
• einen Datenbus (501), der kommunikativ an einen Speicher (504) sowie andere Komponenten des Systems gekoppelt ist, sodass sie durch eine Steuereinrichtung (505) verwaltet werden können;
• ein Kommunikationsmodul (503) ist konfiguriert, um Kommunikation zwischen dem System und Clients zu erleichtern, die sich in einem Abonnementregister (507) registrieren, indem ihre Adressdaten sowie Behälterabonnementparameter bereitgestellt werden;
• einen Behälterkartenmanager (502), der für die Verwaltung einer Behälterkarte gemäß den Benachrichtigungen von einer zugrunde liegenden Datenbank verantwortlich ist;
• ein Änderungsinformationszusammenführungsmodul (508), das konfiguriert ist, um Informationen, die in der Behälterkarte umfasst sind, zusammenzuführen;
• einen Warteschlangenmanager für ausgehende Benachrichtigungen (506), der für das Verwalten der ausgehenden Warteschlangenbenachrichtigungen unter Steuerung der Steuereinrichtung (505) verantwortlich ist, der konfiguriert ist, um alle Schritte des Verfahrens nach Anspruch 1 auszuführen
• einen Warteschlangenmanager für ausgehende Benachrichtigungen (506), der für das Verwalten der ausgehenden Warteschlangenbenachrichtigungen unter Steuerung der Steuereinrichtung (505) verantwortlich ist, der konfiguriert ist, um alle Schritte des Verfahrens nach Anspruch 1 auszuführen.

## Revendications

1. Procédé permettant la synchronisation d'objets multimédias entre des dispositifs dans un système client-serveur, le procédé étant **caractérisé en ce que** le serveur est configuré pour exécuter les étapes de :
• fourniture (601) d'une pluralité d'objets de données dans une base de données ;
• fourniture (602) d'au moins un conteneur comprenant au moins un objet ;
• réception (603) d'une notification, en provenance de ladite base de données, qu'au moins l'un des objets dudit au moins un conteneur a changé ;
• vérification (604) pour savoir si un dispositif client s'est abonné à des notifications concernant des changements concernant ledit conteneur ; et
• pour chaque client abonné fournissant (605) une notification poussée, comprenant des métadonnées des objets dudit conteneur, informant que les données dudit conteneur ont changé ;
le procédé étant **caractérisé en ce que** :
• la notification push envoyée à chaque client (403) comprend un numéro de séquence, qui est une valeur associée au client et est incrémentée avant qu'une notification ne soit envoyée à ce client.

2. Procédé selon la revendication 1, ledit procédé comprenant en outre une étape d'attente des confirmations (124) des notifications push reçues par les clients respectifs.

3. Procédé selon la revendication 1, ladite carte de conteneur étant fournie sous la forme d'une structure, qui contient des informations sur tous les conteneurs qui sont surveillés par des clients et des informations sur les changements d'objets appartenant à ce conteneur.

4. Procédé selon la revendication 3, lesdites informations sur les changements d'objets appartenant à ce conteneur sont l'un des suivants :
- un objet a été ajouté au conteneur ;
- un objet appartenant au conteneur a été mis à jour ;
- un objet a été supprimé du conteneur.

5. Procédé selon la revendication 4, comprenant en outre les étapes de vérification pour savoir si un objet, pour lequel une nouvelle notification de changement doit être générée, est déjà présent dans la carte de conteneur et les informations de changement déjà présentes sont les informations « objet ajouté » et quand il l'est et les nouvelles informations de changement d'objet sont :
a) des informations d'objet mis à jour - alors les informations ajoutées sur l'objet sont conservées ;
b) des informations d'objet supprimé - alors les informations de modification sont supprimées du conteneur.

6. Procédé selon la revendication 4, comprenant en outre les étapes de vérification pour savoir si un objet, pour lequel une nouvelle notification de changement doit être générée, est déjà présent dans la carte de conteneur et les informations de changement déjà présentes sont les informations « objet mis à jour » et quand il l'est et les nouvelles informations de changement d'objet sont :
a) des informations d'objet mis à jour - alors les informations ne sont pas modifiées ;
b) des informations d'objet supprimé - alors les informations d'objet supprimé sont conservées.

7. Procédé selon la revendication 4, comprenant en outre les étapes de vérification pour savoir si un objet, pour lequel une nouvelle notification de changement doit être générée, est déjà présent dans la carte de conteneur et les informations de changement déjà présentes sont les informations « objet supprimé » et quand il l'est et les nouvelles informations de changement d'objet sont :
a) des informations d'objet ajouté - alors les informations d'objet mis à jour sont conservées.

8. Procédé selon la revendication 1, lesdits conteneurs possédant une priorité de traitement attribuée, lesdits objets les plus importants étant transférés en premier et tous les autres objets étant transférés selon l'algorithme de tourniquet.

9. Programme informatique comprenant un moyen de code de programme permettant d'effectuer toutes les étapes du procédé mis en œuvre par ordinateur selon la revendication 1 lorsque ledit programme est lancé sur un ordinateur.

10. Support lisible par ordinateur stockant des instructions exécutables par ordinateur réalisant toutes les étapes du procédé mis en œuvre par ordinateur selon la revendication 1 lorsqu'elles sont exécutées sur un ordinateur.

11. Système permettant la synchronisation d'objets média entre des dispositifs dans un système client-serveur, le serveur étant **caractérisé en ce qu'**il comprend :
• un bus de données (501) couplé en communication à une mémoire (504) ainsi qu'à d'autres composants du système afin qu'ils puissent être gérés par un dispositif de commande (505) ;
• un module de communication (503) est configuré pour faciliter la communication entre le système et les clients qui s'enregistrent dans un registre d'abonnement (507) en fournissant leurs données d'adresse ainsi que les paramètres d'abonnement des conteneurs ;
• un gestionnaire de carte de conteneurs (502) chargé de gérer une carte de conteneurs selon les notifications provenant d'une base de données sous-jacente ;
• un module de fusion d'informations de changement (508) configuré pour fusionner des informations comprises dans la carte de conteneurs ;
• un gestionnaire de file d'attente de notifications sortantes (506) chargé de gérer les notifications de file d'attente sortantes sous la commande du dispositif de commande (505) configuré pour exécuter toutes les étapes du procédé selon la revendication 1 ;
• un gestionnaire de file d'attente de notifications sortantes (506) chargé de gérer les notifications de file d'attente sortantes sous la commande du dispositif de commande (505) configuré pour exécuter toutes les étapes du procédé selon la revendication 1.
